# EUROPEAN PATENT SPECIFICATION

(11) **EP 0 381 631 B1**
(45) Date of publication and mention of the grant of the patent: **11.08.1993**
(21) Application number: 90830025.4
(22) Date of filing: 24.01.1990
(51) Int. Cl.: C01B 3/00, C22C 16/00, F17C 3/08, F16L 59/06

(54) **Getter materials for the vacuum insulation of liquid hydrogen storage vessels or transport lines**
Gettermaterialien für die Vakuumisolation von Wasserstoffspeichergefässen und Transportlinien
Matériaux getter pour l'isolation par le vide de récipients de stockage d'hydrogène ou de conduites de transport

(30) Priority: 24.01.1989 IT 1915789
(43) Date of publication of application: 08.08.1990
(73) Proprietor: SAES GETTERS S.p.A., I-20123 Milano (IT)
(72) Inventor: Boffito, Claudio, RHO (Milano) (IT); Ferrario, Bruno, Rescaldina (Milano) (IT); Doni, Fabrizio, Milano (IT)
(74) Representative: Adorno, Silvano

(56) References cited:
- FR-A- 2 507 626
- US-A- 4 082 834
- US-A- 4 546 798

## Description

The present invention relates to getter materials for the vacuum insulation of liquid hydrogen storage vessels or trasport lines.

Cryogenic fluids such as a liquid He, O₂, N₂ and H₂ and H₂ are in widespread use. As far as possible they are surrounded by an insulating means to ensure that there is little transfer of heat into the cryogenic fluid. US Patent 3,114,469 describes the thermal insulation of a cryogenic fluid storage container or Dewar. US Patent 4,546,798 and the UK Pat. Application GB 2,139,311 A describe thermally insulated fluid transport pipes. In all these cases the thermal insulation is provided by means of a vacuum. Furthermore, in order to prevent degradation of the vacuum and hence loss of thermal insulation, it is customary to use a getter material within the evacuated space. This getter material serves to continuously sorb gases which are slowly released from the walls surrounding the vacuum space or from other components such as the known "superinsulations" which may also be present within the vacuum space.

To this aim whichever getter material being known in the art can be used, such as that disclosed in US Patent 4,428,856 formed of an alloy having the following composition in weight: 10%Mo-80%Ti-10%TiH₂, available in commerce under the trademark St 175 from SAES GETTERS S.p.A., Milan, Italy. Another getter material that could be used is the one disclosed by US Patent 4,306,887 and formed of an alloy comprising 23,5% Fe in weight, balance Zr. Also this material is commercialized by SAES GETTERS S.p.A. under the trademark St 198.

Other getter materials have been used to maintain a vacuum for the specific purpose of thermally insulating cryogenic fluids. The above-mentioned US Patent 4,546,798 lists at least five different suitable getter material among which there is a family of Zr-V-Fe ternary alloys described in more detail in the US Patent 4,312,669. One of the alloys described in the last mentioned patent is the one having the composition by weight of 40% Ti and 60% of a binary alloy named St 101 formed in turn of 84% wt Zr and 16% wt Al. Also this alloy, described more in detail in the US Patent 3,926,832 is manufactured and sold by the same applicant under the tradename St 301. Another alloy mentioned in US Patent 4,546,798 is the one having the composition by weight of 70% Zr - 24.6% V - 5.4% Fe which has found particular acceptance for the use as a getter material to maintain the vacuum in the insulation of cryogenic fluids. Also this getter material is available in commerce under the tradename St 707 from SAES GETTERS S.p.A. Its widespread acceptance is probably due to the fact that is can be activated at relatively low temperatures of 500°C or less and still possesses a high gas pumping speed.

However the use of such traditional getter materials even if is absolutely satisfactory under usual operating conditions, may show several disadvantages, under particular circumstances, in the vacuum insulation of liquid hydrogen. Leaks may develop in the wall separating the vacuum insulation from the liquid hydrogen. In this case the liquid hydrogen evaporates and forms a relatively high pressure of hydrogen within the vacuum enclosure. This gaseous hydrogen reacts rapidly with the getter material due to its high gas pumping speed. As a consequence of this rapid chemical reaction the temperature of the getter material rapidly increases and may reach many hundreds of degrees centragrades. Simultaneously a leak may also occur in the wall which separates the vacuum insulation from the external atmosphere. This leak may be caused by the rapid increase in temperature of the getter itself or may occur for any other reasons. Whatever the cause of an air leak into the vacuum enclosure there is formed an H₂ -O₂ mixture. This mixture can react explosively on contact with the hot getter device with catastrophic consequences.

It is therefore an object of the present invention ot provide a getter material free from one or more of the disadvantages of prior getter materials.

It is another object of the present invention a getter material which when exposed to a high hydrogen pressure does not excessively increase its temperature.

It is yet a futher object of the present invention to provide a getter material sorbing a plurality of gases at low pressure which, if exposed to high hydrogen pressure in the presence of oxygen does not increase its temperature to the ignition temperature of the H₂-O₂ mixture.

There is also provided a method of sorbing a plurality of gases at low pressures, by contacting the gases with a geter material which, if exposed to a high hydrogen pressure in the presence of oxygen does not increase its temperature to the ignition temperature of the H₂-O₂ mixture.

These and additional objects, advantages and features of the getter materials of the present invention will become apparent to those skilled in the art by reference to the following detailed description thereof and drawings wherein:
FIGURE 1 is a graph showing the temperature reached by getter devices of the present invention during the sorption of hydrogen at relatively high pressures compared with the temperature reached by prior art getter devices under the same condtions; and
FIGURE 2 shows the results of sorption tests reative to hydrogen and CO for the same types of getter as used for the construction of Fig. 1.

The invention proceeds along the line of providing a getter material as an alloy having the formula:

Zr₁₋ₐ Tiₐ V₂₋ₓ Fe_{x-y} Ni_{y}

where a = 0 to 0.3; x = 0.5 to 1.5; y = 0 to x, preferably: a = 0; X = 1; y = 0 to 0.5; and even more preferably y = 0.

Surprisingly, it has been found that getter materials of the present invention when exposed to a high hydrogen pressure increase their temperature to a value less than that of the ignition temperature of H₂-O₂ mixtures. Furthermore the gettering characteristics towards other gases are only slightly reduced and remain sufficient to still act as a suitable getter material to maintain in the vacuum in the insulation of liquid hydrogen.

### EXAMPLE 1

A getter material was prepared having a composition Zr₁ V₁ Fe₁ (a = 0, x = 1 and y = 0) by pressing the appropriate weight ratios of the individual components in a vacuum arc furnace. The arc furnace was back filled with argon gas to a pressure of between 400 and 500 mbar to produce an ingot of the ternary alloy. The ternary alloy was re-melted sevaral times to ensure homogeneity. It was then ground to a powder size of less than approximately 125 µm. This powder was then mixed with approximately 5% by weight of aluminium powder having a powder size less than approximately 150 µm. The powder was than compressed into pills having a diameter of 6 mm and a height of 4 mm each containing about 550 mg of powder mixture.

### EXAMPLE 2

This example is made for comparative purposes and uses the prior art getter device described in US Patent 4,312,669 above having a composition of 70% Zr - 24.6% V - 5.4% Fe. The getter material was again in the form of compressed pills having an outside diameter of 6 mm, a height of 4 mm and a weight of approximately 630 mg.

### EXAMPLE 3

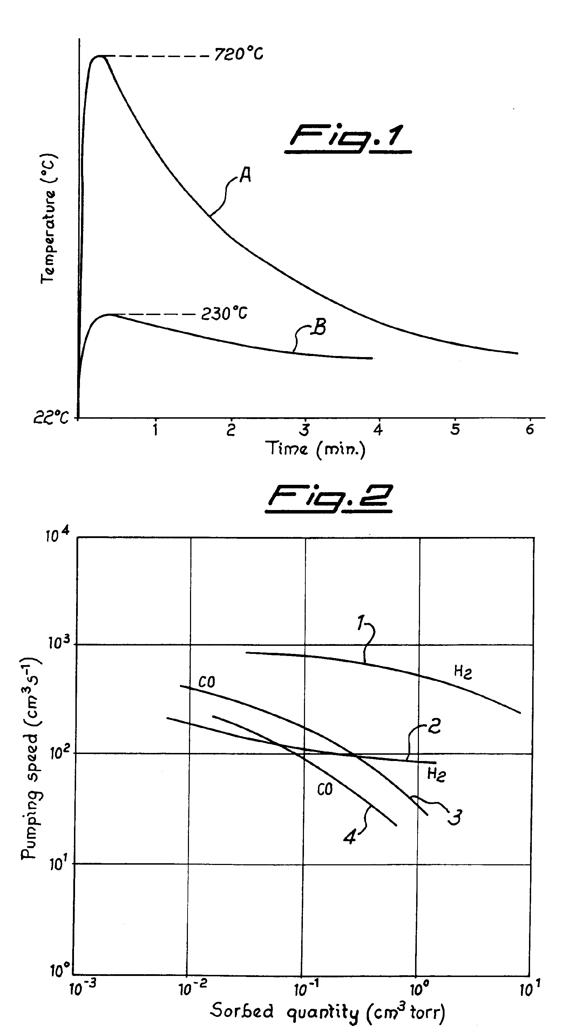

This example is designed to show the increase in temperature of prior art getter device when exposed to relatively high hydrogen pressures:
A) 10 pills prepared according to example 2 together with a thermo-couple were placed in a cylindrical container and then the container was placed in a volume of 0.6 l. This volume was evacuated to a pressure of less than about 10⁻⁴ mbar. The getters were than heated to 500°C for 10 minutes and allowed to cool to room temperature. The 0.6 l evacuated volume containing the 10 pills was than placed in contact with a second volume of 1.5 l filled with 514 mbar of hydrogen. The change in temperature of the prior art getter pills as a function of time is recorded as curve A of Fig. 1.
B) The test above was repeated exactly at the same manner by using ten pills of the same size, prepared from the abvove-mentioned alloy St 198 according to US Patent 4,306,887. A maximum temperature of about 800°C was obtained.
C) A pill was formed by conpression from the alloy named St 175 (see above) according to US Patent 4,428,856 with a diameter of 6 mm and a height of 2 mm. Such a pill with a thermocouple applied thereon, was introduced in a volume of 0.6 l being evacuatred at conditions like those described in example 3A). Upon subjecting the pill to the same sequence of operations as described above a maximum temperature of the getter pill of about 700°C was reached.
D) The test of example 3C) was repeated exactly as before except for the pill being formed of the above mentioned alloy, known as St 301 according to US Patent 3,926,832 with sintered components and a height size of 3 mm. The maximum temperature reached in those conditions by the getter pill was 733°C.
E) Exactly the same test of example 3D) was repeated, except that the alloy components were not sintered in this case. A maximum temperature of 685°C was monitored for the getter device.

### EXAMPLE 4

The test of example 3 was repeated in exactly the same manner except that the getter pills were replaced with getter pills of the present invention as described in example 1. The change in temperature of the getter devices of the present invention are recorded on Fig. 1 as curve B.

### EXAMPLE 5

In order to show the hydrogen sorption properties of a prior art getter device sorption tests were performed according to ASTM Standard F798-82 using a getter device prepared according to example 2. The getter device was activated at 500°C for 10 minutes and hydrogen sorption was performed at a getter temperature of 25°C. The hydrogen pressure was 3 times 10⁻⁶mbar. The pumping speed is recorded as a quantity of hydrogen sorbed forming curve 1 of Fig. 2.

### EXAMPLE 6

The sorption tests of example 5 were repeated at exactly the same conditions except that the getter device was replaced by a getter device of the present invention prepared according to example 1. The pumping speed as a function of quantity of hydrogen sorbed is reported as curve 2 on Fig. 2.

### EXAMPLE 7

The sorption tests of example 5 were repeated except that the gas used was CO and the related curve is reported on Fig. 2 as curve 3.

### EXAMPLE 8

Example 6 is repeated using exactly the same conditions except that the gas is replaced by CO and the curve is reported as curve 4 on Fig. 2.

### DISCUSSION

As can be seen from Table I given below

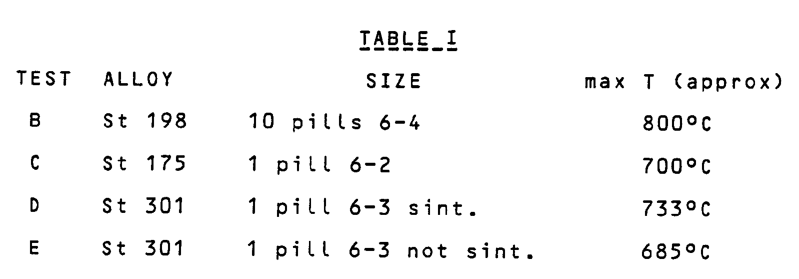

in which for each test B-E of example 3 there are indicated the results of maximum temperature reached by the getter material used each time, the prior art getter devices when exposed to a high hydrogen pressure reach temperatures which in all cases exceed the value of 570°C, to be considered as danger threshold for the possible ignition of an air/hydrogen mixture.

Furthermore, as can be seen from Fig. 1, also the preferred traditional Zr-V-Fe getter devices according to US Patent 4,312,669 show an extremely high temperature increase up to 720°C when exposed to a high pressure of hydrogen (curve A) according to the example 3 A). On the contrary the getter devices of the present invention as shown by curve B of Fig. 1 reach a temperature of only 230°C. This temperature of 230°C is much less than the spontaneous ignition temperature of an air/hydrogen mixture which is approximately 570°C. Furthermore with reference to Fig. 2 although the hydrogen sorption speed has been reduced considerably by the use of getter materials of the present invention, as can be seen from comparing curve 2 with curve 1, the sorption curves for other gases as exemplified by curve 4 again in Fig. 2, obtained for CO with a getter material of the present invention, show that the sorption speed is only slightly reduced with respect to that of a prior art getter device, shown in curve 3.

## Claims

1. A getter material for sorbing a plurality of gases at low pressures which, if exposed to a high hydrogen pressure in the presence of oxygen, does not increase its temperature to the ignition temperature of the H₂-O₂ mixture, characterized by comprising an alloy of the formula
Zr₁₋ₐ Tiₐ V₂₋ₓ Fe_{x-y} Ni_{y}
where a = 0 to 0.3, x = 0.5 to 1.5, y = 0 to x.

2. A getter material of claim 1 in which:
a = 0; x = 1; y = 0 to 0.5.

3. A getter material of claim 2 in which:
y = 0.

4. A method of sorbing a plurality of gases at low temperatures with a getter material, characterized by the fact of contacting the gases with a getter material which, if exposed to a high hydrogen pressure in the presence of oxygen, does not increase its temperature to the ignition temperature of the H₂-O₂ mixture, the getter material comprising an alloy of the formula
Zr₁₋ₐ Tiₐ V₂₋ₓ Fe_{x-y} Ni_{y}
where a = 0 to 0.3; x = 0.5 to 1.5; y = 0 to x.

5. The method of claim 4 in which:
a = 0; x = 1; y = 0 to 0.5.

6. The method of claim 5 in which:
y = 0.

## Patentansprüche

1. Gettermaterial zum Sorbieren einer Vielzahl von Gasen unter niedrigen Drücken, das, wenn es einem hohen Wasserstoffdruck in Gegenwart von Sauerstoff ausgesetzt ist, keinen Temperaturanstieg bis zur Zündtemperatur des H₂-O₂-Gemisches erfährt, dadurch gekennzeichnet, daß es eine Legierung der Formel
Zr₁₋ₐTiₐV₂₋ₓFe_{x-y}Ni_{y}
umfaßt, worin a = 0 bis 0,3, x = 0,5 bis 1,5 und y = 0 bis x sind.

2. Gettermaterial nach Anspruch 1, bei dem a = 0, x = 1 und y = 0 bis 0,5 sind.

3. Gettermaterial nach Anspruch 2, bei dem x = 0 ist.

4. Verfahren zum Sorbieren einer Vielzahl von Gasen unter niedrigen Temperaturen mit einem Gettermaterial, gekennzeichnet durch das Kontaktieren der Gase mit einem Gettermaterial, das, wenn es einem hohen Wasserstoffdruck in Gegenwart von Sauerstoff ausgesetzt ist, keine Temperaturerhöhung bis zur Zündtemperatur des H₂-O₂-Gemisches erfährt und eine Legierung der Formel
Zr₁₋ₐTiₐV₂₋ᵢFe_{x-y}Ni_{y}
umfaßt, worin a = 0 bis 0,3, x = 0,5 bis 1,5 und y = 0 bis x sind.

5. Verfahren nach Anspruch 4, bei dem a = 0, x = 1 und y = 0 bis 0,5 sind.

6. Verfahren nach Anspruch 5, bei dem x = 0 ist.

## Revendications

1. Un matériau getter pour la sorption d'une pluralité de gaz à faible pression qui, quand il est exposé à une pression élevée d'hydrogène en présence d'oxygène, n'augmente pas sa température jusqu'à la température d'inflammation du mélange H₂-O₂, caractérisé en ce qu'il comprend un alliage de formule
Zr₁₋ₐ Tiₐ V₂₋ₓ Fe_{x-y} Ni_{y}
dans laquelle a = 0 à 0,3 ; x = 0,5 à 1,5 ; y = 0 à x.

2. Un matériau getter selon la revendication 1, dans lequel :
a = 0 ; x = 1 ; y = 0 à 0,5.

3. Un matériau getter selon la revendication 2, dans lequel :
y = 0.

4. Un procédé de sorption d'une pluralité de gaz à basses températures avec un matériau getter, caractérisé par le fait de mettre en contact les gaz avec un matériau getter qui, quand il est exposé à une pression élevée d'hydrogène en présence d'oxygène, n'augmente pas sa température jusqu'à la température d'inflammation du mélange H₂-O₂, le matériau getter comprenant un alliage de formule
Zr₁₋ₐ Tiₐ V₂₋ₓ Fe_{x-y} Ni_{y}
dans laquelle a = 0 à 0,3 ; x = 0,5 à 1,5 ; y = 0 à x.

5. Le procédé selon la revendication 4, dans lequel :
a = 0 ; x = 1; y = 0 à 0,5.

6. Le procédé selon la revendication 5, dans lequel :
y = 0.
